# EUROPEAN PATENT SPECIFICATION

(11) **EP 1 135 900 B1**
(45) Date of publication and mention of the grant of the patent: **27.04.2005**
(21) Application number: 99963362.1
(22) Date of filing: 02.12.1999
(51) Int. Cl.: H04L 12/56, H04Q 7/22

(54) **HANDOVER IN A COMMUNICATION SYSTEM**
WEITERREICHEN IN EINEM KOMMUNIKATIONSSYSTEM
TRANSFERT DANS UN SYSTEME DE COMMUNICATION

(30) Priority: 04.12.1998 FI 982619
(43) Date of publication of application: 26.09.2001
(73) Proprietor: Telefonaktiebolaget LM Ericsson (publ), 164 83 Stockholm (SE)
(72) Inventor: LATVALA, Mikael, FIN-00250 Helsinki (FI)
(74) Representative: Kärkkäinen, Veli-Matti
(86) International application number: PCT/EP1999/009394
(87) International publication number: WO 2000/035151

(56) References cited:
- EP-A- 0 917 318
- CHUAH, GROSSER, RAI, TEPLITSKY, RABU: "Mobile PPP (MPPP)" PPP-EXTENSION WORKING GROUP, 18 November 1998 (1998-11-18), XP002134063 RETRIEVED FROM THE INTERNET: 27.3.2000, ftp.informatik.uni-bremen.de/pub/doc/inter net-drafts/draft-ietf-pppext-mppp-00.txt
- VALENCIA ET. AL.: 'LAYER TWO TUNNELING PROTOCOL L2TP' PPP WORKING GROUP INTERNET DRAFT, RETRIEVED FROM THE INTERNET: 22-06-1999, OCTOBER 1998 (1998-10), HTTP://WWW.TOWNSLEY.NET/MARK/12TP/DRAFT-IET F-PPEXT-12TP-12.TXT, XP002106956

## Description

### FIELD OF THE INVENTION

The present invention relates to a method of providing mobile communication for a user of a mobile station such that the mobile user is provided with a possibility to access data network services via the mobile communications system. The invention relates further to a communication system enabling a mobile access to data network services provided by a data network server.

### BACKGROUND OF THE INVENTION

Telecommunication systems providing mobility for the users thereof are well known. The Public Land Mobile Network (PLMN) systems providing mobility include analogue and digital telecommunication networks which are based on various national or international standards, such as the analogue NMT (Nordic Mobile Telephony), AMPS (American Mobile Phone System) or TACS (Total Access Communication System) systems or the digital GSM (Global System for Mobile Communication), PCS (Personal Communications Services). PDC (Personal Digital Cellular) or D-AMPS (Digital AMPS). The basic concept of these is such that a mobile user in enabled to have a radio interface with a base station of the PLMN system. which links the call to the other parts of the PLMN. The PLMN is capable of communicating with other communication networks via suitable gateways. One essential feature of the PLMN is that the users thereof are able to move, i.e. roam, from the service area of one base station or base station subsystem to another service area served by another base station.

Various data networks are also known, and a Packet Switched Public Data Network (PSPDN; e.g. X.25) and global Internet based on TCP/IP (Transport Control Protocol/Internet Protocol) are given herein as examples of such. The Internet may be defined as a global open communications network connecting a great number of local area networks, such as networks of various companies, public administration, universities and other organisations and e.g. LANs (Local Area Network) or MANs (Metropolitan Area Network) through e.g. PSTNs (Public Switched Telephone Network) and/or ISDNs (Integrated Services Digital Network) and suitable gateways.

In most cases various services accessible through the Internet are provided utilising so called HTTP protocol (Hypertext Transfer Protocol) of a World Wide Web (WWW), which provides a graphical Internet interface for a data processing device. such as a microcomputer or a PC (Personal Computer) or a workstation. The WWW contains HTML documents (HyperText Mark-up Language), i.e. "hyperdocuments", one such document forming one entity which can contain text, pictures, even moving pictures and video, and sound and links to other documents. A hyperdocument usually has so called "web master" who updates the information contained in the HTML document, i.e. the document data.

In addition to a conventional Public Switched telephone Network (PSTN) having fixed connections, it is also possible to access the packet switched data networks, such as the Internet and thus also the WWW pages and other services provided by Internet Service Providers (ISPs), by means of a mobile station communicating through an air interface with the Public Land Mobile Network (PLMN). Apparatus enabling the access comprise e.g. various types of portable computers connected to a mobile telephone or corresponding radio transceiver interface device. The major manufacturers of mobile telephones apparatus do provide suitable interface means for enabling the data processing device to access the desired data networks, such as to the Internet, by means of the mobile telephone and via the mobile telecommunication network. The mobile station and the mobile network used for the access can also be based on either the analogue or the digital mobile telephony technology.

In addition to separate devices, integrated data processing and mobile transceiver apparatus are also known. In these the mobile station is an integrated portable unit comprising a data processing device including a CPU (Central Processing Unit), necessary memory means, a display, a keypad and transceiver means for mobile communications.

According to one solution for providing an access for a PLMN user to the Internet, an Internet Access Server (IAS) is connected to the Mobile Switching Center (MSC) of the mobile telephony system. The IAS is arranged to identify the destination number to which the calling mobile telephone tries to establish a connection (B-number). If the destination number is an Internet Service Provider (ISP) number, the call will not be routed further to the Public Switched Telephone Network (PSTN) as an ordinary circuit switched call, but it is terminated to the IAS and the data will then be routed via a data network to the ISP, usually in a form of data packets as a packet switched call. At present the arrangements are such that each country, or in some countries each PLMN, has only one Internet Access Node.

To enable the access to the ISP, a tunnelling protocol, such as a Layer Two Tunnelling Protocol (L2TP) by IETF (Internet Engineering Task Force), can be used to permit tunnelling of a link layer of a Point-to-Point Protocol (PPP; defined e.g. by RFC 1661 Memo, July 1994, Editor W. Simpson) over the used data network. In this case the remote mobile user initiates the PPP connection to the service provider via the PLMN which comprises an access node (AN), such as a L2TP Access Concentrator (LAC). The access node is provided in one end of the tunnel, and it accepts the connection whereafter a PPP link for the mobile user becomes established. Thereafter a L2TP Network Server (LNS) at the other end of the L2TP tunnel completes the PPP session negotiation (i.e. the initiation procedure) by authenticating the remote mobile user and by configuring one or several network layers. Because L2TP may multiplex several calls over one tunnel, each point-to-point connection has a unique call ID (identification) within the tunnel.

### SUMMARY OF THE INVENTION

The present arrangements have still some disadvantages, for instance in cases where a mobile user roams from one service area of the communication system to another service area, i.e. to an area which is served by another access node (e.g. another LAC). Every time when the mobile user enters a new service area the old PPP session with the old access node has to be deleted and thereafter a new PPP session with the new access node has to be negotiated. This causes additional signalling traffic and takes some time. The present PLMN systems have been found to have high end-to-end delays, and thus this mandatory negotiation procedure causes in most cases a substantially long handover process, such as a handover process lasting about 5 to 30 seconds. The temporary disconnection of the service caused by the handover proceedings disturbs strongly the use of the data network service in a real time connection, and the user may even become disconnected. The temporary disconnection of the service has also an adverse effect on TCP (Transmission Control Protocol) performance.

It is an object of the present invention to overcome the disadvantages of the prior art solutions and to provide a new type of solution for roaming mobile users for accessing data network services, such as services provided by Internet Service Providers via the Internet.

Another object of the present invention is to provide a method and a system by means of which it is possible to minimise the delay in handover between two access nodes when the mobile user roams from a service area served by a first access node to a service area served by another access node.

To enable the access to the ISP, a tunnelling protocol, such as a Layer Two Tunnelling Protocol (L2TP) by IETF (Internet Engineering Task Force), can be used to permit tunnelling of a link layer of a Point-to-Point Protocol (PPP; defined e.g. by RFC 1661 Memo, July 1994, Editor W. Simpson) over the used data network. In this case the remote mobile user initiates the PPP connection to the service provider via the PLMN which comprises an access node (AN), such as a L2TP Access Concentrator (LAC). The access node is provided in one end of the tunnel, and it accepts the connection whereafter a PPP link for the mobile user becomes established. Thereafter a L2TP Network Server (LNS) at the other end of the L2TP tunnel completes the PPP session negotiation (i.e. the initiation procedure) by authenticating the remote mobile user and by configuring one or several network layers. Because L2TP may multiplex several calls over one tunnel, each point-to-point connection has a unique call ID (identification) within the tunnel.

M. C. Chuah et al., "Mobile PPP", PPP Working Group, 18 November 1998 (XP-002134063 Internet draft), describes a solution for a change of LACs during the lifetime of a PPP session without latency of re-creating a new PPP session. The solution further considers a situation where a user's mobility may result in a change of LAC during an ongoing PPP session (with a LNS).

EP 917318 (date of publication 19 May 1999) describes a wireless data network providing communications with Pier to Pier Protocol server. The solution provides end users with remote wireless access to the Internet (or private intranets or internet service providers) through base stations and MSC.

### SUMMARY OF THE INVENTION

The present arrangements have still some disadvantages, for instance in cases where a mobile user roams from one service area of the communication system to another service area, i.e. to an area which is served by another access node (e.g. another LAC). Every time when the mobile user enters a new service area the old PPP session with the old access node has to be deleted and thereafter a new PPP session with the new access node has to be negotiated. This causes additional signalling traffic and takes some time. The present PLMN systems have been found to have high end-to-end delays, and thus this mandatory negotiation procedure causes in most cases a substantially long handover process, such as a handover process lasting about 5 to 30 seconds. The temporary disconnection of the service caused by the handover proceedings disturbs strongly the use of the data network service in a real time connection, and the user may even become disconnected. The temporary disconnection of the service has also an adverse effect on TCP (Transmission Control Protocol) performance.

It is an object of the present invention to overcome the disadvantages of the prior art solutions and to provide a new type of solution for roaming mobile users for accessing data network services, such as services provided by Internet Service Providers via the Internet.

Another object of the present invention is to provide a method and a system by means of which it is possible to minimise the delay in handover between two access nodes when the mobile user roams from a service area served by a first access node to a service area served by another access node.

Another object of the present invention is to provide a method and a system by means of which renegotiating procedures during a handover of a roaming mobile station can be avoided.

Another object of the present invention is to provide a method and a system by means of which risk for a disconnection in communication between a roaming mobile station and a data network service can be reduced.

The objects are obtained by a method for use in a communication system comprising at least one mobile communication network providing mobility for mobile stations, a data network, at least two access nodes for providing an access for the mobile stations to the data network, and at least one data network server for providing service or services. The method comprises steps of establishing a connection between a first access node and the data network server, wherein the connection is initiated and used by a mobile station located within a first service area of the communication system served by the first access-node, dedicating a specific session identification for the connection between the first access node and the data network server, roaming of the mobile station using the connection between the first access node and the data network server from the first service area to a second service area of the communication system, wherein the second service. area is served by a second access node, recognising in the second access node the roaming mobile station, obtaining said specific session identification in said second access node, and requesting the data network server to transfer the connection between the first access node and the network server associating with said specific session identification to continue as a connection between said second access node and the data network server for enabling continuous communication between the mobile station and the network server.

A communication system in accordance with the invention comprises at least one mobile communication network providing mobility for mobile stations, a data network, a network server implemented in the data network, a first access node serving a first service area of the communication system, wherein said first access node is arranged to enable an access for a mobile station to the data network by providing a connection between the first access node and the network server, said connection between the access node and the network server being dedicated with a specific session identification, and a second access node serving a second service area of the communication system, wherein said second access node is also arranged to enable an access for the mobile station to the data network by providing a connection between the second access node and the network server. The second access node is arranged to recognise the mobile station roaming into the second service area, and subsequent to such recognition to obtain the specific session identification and to send the obtained session identification information to the network server. The network server is arranged to transfer the connection between the first access node and the network server to continue as a connection between the second access node and the network server for enabling a continuous communication between the mobile station and the network server.

According to one embodiment the connection between the respective access nodes and the data network server is a point-to-point connection. The point-to-point connection can preferably be implemented by means of Layer Two Tunnelling Protocol (L2TP). In addition, the mobile communication network can be arranged to provide the second access node with predefined information concerning the roaming mobile station, wherein the session identification consist of a session ID formed by means of at least some of the following: an International Mobile Subscriber Identity (IMSI), a Mobile Station ISDN number (MSISDN), calling number information. According to one possibility the method comprises a step for requesting an authentication from the mobile station subsequent to the roaming from the first service area to the second service area.

Several advantages are obtained by means of the present invention, since the solution provides a simple, reliable and controllable manner for the handover process of a roaming mobile station. By means of the present solution it is possible to decrease the overall handover process time. In addition, the ongoing connection between the mobile station and the service is disturbed less than in the prior art solutions and in most cases the connection will not be disturbed at all by the handover proceedings. The handover proceedings will not cause a noticeable drop in the performance of the connection.

In the following the present invention and the other objects and advantages thereof will be described in an exemplifying manner with reference to the annexed drawings, in which similar reference characters throughout the various figures refer to similar features.

### BRIEF DESCRIPTION OF THE DRAWINGS

Figure 1 is a schematic presentation of one possible communications system in which the invention can be utilised;
Figure 2 is a schematic presentation of a signalling arrangement according to a preferred embodiment of the present invention;
Figure 3 is a schematic presentation of a signalling arrangement according to one alternative embodiment of the present invention; and
Figure 4 discloses a flow chart for the operation in accordance with the embodiment of figure 2.

### DETAILED DESCRIPTION OF THE DRAWINGS

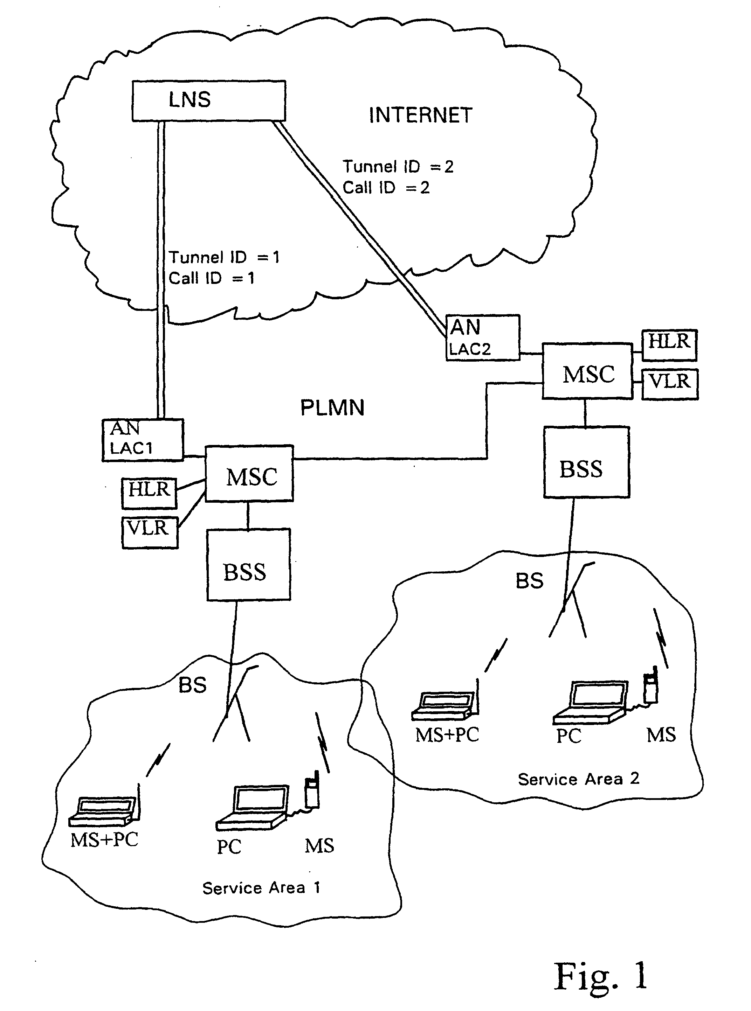

Firstly, general structure of a telecommunication system comprising a Public Land Mobile Network (PLMN) enabling communication between mobile user terminals as well as between the PLMN and a data network, i.e. Internet in figure 1, will be explained with reference to figure I in order to give a better understanding of the basis of the invention. It is to be noted that some network elements are omitted for reasons of clarity from figure 1.

The telephone system of figure 1 includes a mobile telecommunication network, e.g. a GSM based Public Land Mobile Network (PLMN). Even though not disclosed, the PLMN is usually connected to a Public Switched Telephone Network (PSTN) and/or a similar facility, such as to an Integrated System Digital Network (ISDN) via a suitable gateway. The various telecommunication systems and necessary links therebetween are well known in the art, and are thus not shown or explained herein in more detail.

In the example of figure 1 the PLMN is disclosed to include two Mobile services Switching Centers (MSC), which in turn are connected to plurality of Base Station Subsystems (BSS; only one per MSC disclosed). Each BSS is connected to a plurality of Base Stations (BS; only one per BSS disclosed), each of which supervises a predefined geographical area called as a cell. In this example each MSC forms one service area. As disclosed by figure 1, the service areas of the PLMN may also interleave with each others. In general it can be said that the arrangement of a PLMN is such that mobile stations are communicating via a radio interface with the nearby Base Station (BS), which in turn is connected to the Base Station Subsystem (BSS), which in turn is connected to the Mobile services Switching Center (MSC), which is further connected to the appropriate destination communication system via a suitable linking apparatus. In this example the only disclosed connection is the gateway to the Internet via suitable access nodes (AN), as will be explained in more detail later in this specification.

Suitable mobile stations or 'intelligent mobile terminals' which can be utilised when accessing data network services comprise transceiver means for providing the radio communication path with the nearby BS and suitable dataprocessing apparatus for enabling the use of the data network service. Figure 1 discloses two possibilities for mobile stations: an integrated (or combined) transceiver and dataprocessing device (MS+PC; this is sometimes referred to as communicator) and a combined concept arrangement in which a separate data processing device (PC; e.g. a portable computer) is connected by suitable interface to the mobile transceiver. One further exemplifying solution is a laptop or portable computer provided with a radio card.

The mobile stations are free to roam from the coverage area of one MSC (service area 1) to the coverage area of another MSC (service area 2). The mobile stations may even roam to a coverage area of a MSC of another operator or a foreign network operator. The required gateways between telecommunication systems of various countries and/or operators can be provided in a per se known manner.

The possibility for roaming sets some requirements to the PLMN system so that the system is enabled to follow the movements of the mobile stations and to route the calls to and from the mobile stations in an appropriate manner. As this functionality can be utilised in the invention, the basic features and elements thereof will now be explained in the following.

In most cases the PLMN includes a central database, so called Home Location Register (HLR). The HLR is used for the management of mobile subscribers, and it is thus arranged, among other things, to keep track of the availability and the ongoing calls of the mobile subscribers. The general information stored in the HLR comprises subscriber information and a part of the mobile station location information allowing incoming calls to be routed to the roaming mobile stations. In addition, the HLR stores three identities used in the system: an International Mobile Subscriber Identity (IMSI), a Mobile Station ISDN number (MSISDN) and a Visitor Location Register (VLR) address. The HLR may also contain information concerning subscriber related telecommunications services, such as service restrictions and supplementary services etc.

The MSCs includes further a local database called a Visitor Location Register (VLR) in which all such mobile stations are registered which are located within the coverage or service area of one of the associated cells of the given MSC. The VLR is the functional unit that dynamically stores information of roaming mobile stations, such as the location area. The VLR contains also some other information required so that the MSC is enabled to handle the incoming/outgoing calls. This information is gathered by the VLR via a dialogue with the particular HLR of the mobile station concerned. This information includes e.g. the Mobile Subscriber/Station Roaming Number (MSRN), temporary mobile subscriber identity (if applicable), the location area in which the mobile station has been registered and data relating to supplementary service parameters. Thus the system is such that those mobile stations belonging to a given PLMN and located at the moment within a cell area controlled by a certain MSC are registered temporarily in the VLR of that MSC and permanently in one HLR, which may be another MSC or the same MSC, at the same time. The HLR is always informed about the VLR in which the mobile station is registered, if to any, or at least the VLR to which the mobile station was registered at latest.

It is to be noted that even though the schematic figure 1 shows only two MSCs, BSSs, HLRs, VLRs and BSs for the cellular network, there may be a great number of these network elements in each PLMN. It is also noted that corresponding network elements in different PLMN system may be named differently.

An access node (AN) is required to provide an access of the mobile stations to the data network, which in the example is the packet switched global Internet. Different service areas 1 and 2 of the PLMN may have separate access nodes (LAC1 and LAC2 in the example), and therefore a mobile station roaming from service area 1 to service area 2 is switched correspondingly from LAC1 of the first service arca to LAC2 of the second service area. This procedure is referred to as handover.

The communications system comprises further a network server implemented in the Internet. The network server is usually maintained and run by a service provider or similar facility providing some services for the user of the data network. As the example utilises Layer Two Tunnelling Protocol (L2TP) between the AS and the network server, the network server is named as L2TP network server (LNS). The network server LNS can be defined as an entity or node that enables use of various services provided by Internet Service Providers (ISPs), as explained above.

Each tunnelled point-to-point connection (PPP) between the AN and the LNS has a connection specific information which is dedicated to that precise connection, such a Tunnel ID (identification) number and a Call ID number. According to prior art solutions a mobile station roaming within the PLMN from the service area of LAC1 to the service area of LAC2 would have caused a need for a new Tunnel ID and a new call ID in the Internet for the connection between LAC2 and the LNS.

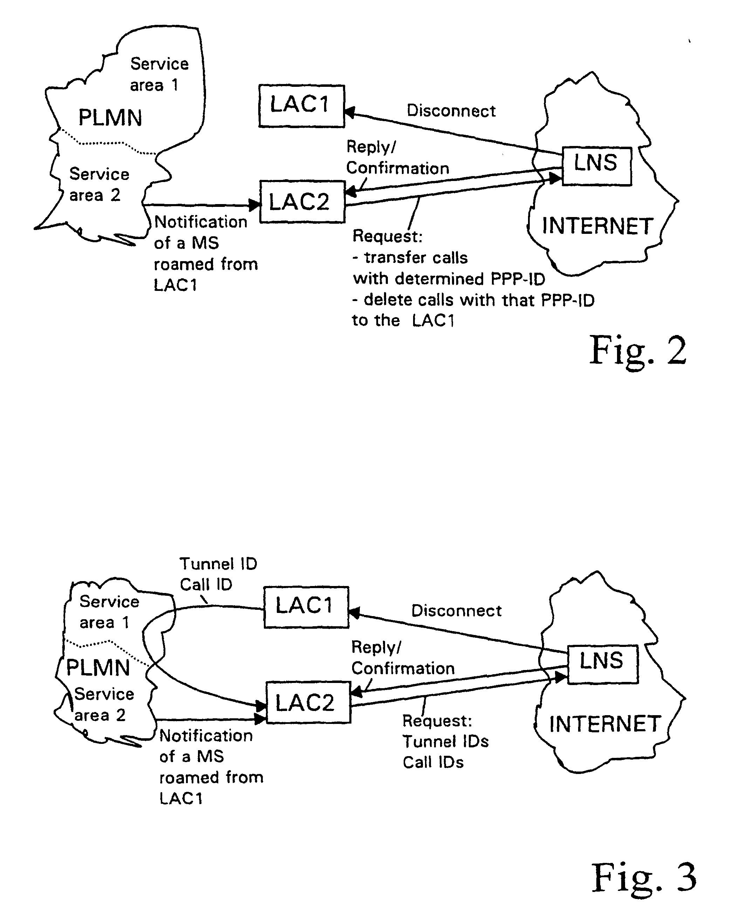

Figure 2 discloses schematically required signalling/messages of the proposed solution after the LNS has noted that a new mobile station having an ongoing point-to-point connection with the LNS has roamed into its service area. According to the proposal a such connection transfer mechanism is introduced to the system which allows the "new" access node LAC2 (i.e. the access node of the new, roamed service area) to request that:
1. the network server LNS would disconnect the existing call in the previous L2TP tunnel between the previous access node LAC1 of the previous service area and the network server LNS, and
2. the network server LNS would associate the ongoing and already existing PPP session with the connection in the L2TP tunnel between the "new" access node LAC2 and the network server LNS so that the existing connection between the LAC1 and the LNS becomes transferred to form a connection between the access node LAC2 and the LNS.

This can be implemented by introducing two new protocol control messages (such as two new L2TP control messages), which can be named as 'Roaming Call Request' and 'Roaming Call Reply'. From these the 'Roaming Call Request' is sent by LAC2 to the LNS after the LAC2 has found out that a remote host (i.e. a mobile station) having an ongoing PPP session with the LNS is now within its service area. The 'Roaming call Reply' in turn is sent by the LNS to the new access node LAC2, and it indicates whether it succeeded or failed in transferring the ongoing PPP session between the LNS and LAC2.

In order to be able to define in the 'Roaming Call Request' for the LNS the call which is to be disconnected between the LNS and LAC1, the new access node LAC2 must obtain certain information concerning the old access node LAC1 and the PPP connection between the LAC 1 and LNS. This can be enabled by using new type of solution for providing the required, connection specific identification information of the connection between LAC1 and LNS. In the following this identification will be referred to as a PPP Session ID (PPP-ID). The PPP-ID is an unique ID which is created when the first connection is established between the LAC1 and the LNS in a Link Control Protocol (LCP). The PPP-ID can be based on A-number information (calling number), on IMSI and/or MSIDN number strings received from the PLMN and/or to various combinations of these. The PPP-ID can also be based on a combination of "magic numbers" (random numbers sent by the LAC 1 and the LNS to each other during handshaking). One possibility is to use the A-number, IMSI, or MSISDN together with some random strings or other strings received from LAC1 and/or LNS. What is required in here for the implementation of this feature is an option in the LCP protocol (LCP option) which in this case would be a negotiated unit forming the PPP-ID.

As is disclosed by figure 2, the PPP-ID used for the PPP connection is preferably provided by the LAC1, and will remain the same during the entire duration of the PPP connection. In addition, the PPP-ID will remain the same even in case the PPP connection is switched between the LAC2 and the LNS subsequent to roaming or even when switching between a further LAC and the LNS subsequent to a further roaming of the mobile station to a further service area.

It is noted herein that the connection between the LAC and the LNS may also consist of several tunnels, e.g. such that one tunnel is for signalling and a second tunnel is for the actual data traffic. In such case all these tunnels have to be switched i.e. transferred from the old LAC to the new LAC whenever the mobile station roams from one service area to another.

In the conventional PPP arrangements the information concerning the connection usually consists of a Tunnel ID and a Call ID. These can be stored in the LNS and then delivered therefrom to the LAC2 subsequent to roaming so as to provide the session identity. According to one alternative disclosed by figure 3 the information required by LAC2 could be provided by the PLMN system instead of the LNS, as the PLMN is always aware of the ongoing calls and the location of the mobile station MS connected thereto, as was described earlier. In this case the arrangement could be such that the old access node LAC 1 sends this information to the PLMN network, which then sends it further to the new access node LAC2, or then the new access node LAC2 can send an inquiry to the PLMN system so as to receive the required information therefrom, e.g. from the HLR or VLR database, as a response to the inquiry. In this case, in addition to the old Call ID and the old Tunnel ID, the 'Roaming Call Request' includes a new Call ID and a new Tunnel ID for the tunnel between the LNS and the new access node LAC2.

After having received the 'Roaming Call Request' message the LNS firstly deletes the old call that is still ongoing between the old access node LAC1 and the LNS. This can be done, for instance, by sending a 'Call Disconnect Notify' message which is specified e.g. in L2TP Internet draft by IETF (October 1998). After having received this information the LNS switches the connection between the LAC2 and LNS "on" or associates the PPP session with the new Tunnel ID and new Call ID provided by LAC2.

To complete the handover proceedings, the LNS sends the 'Roaming Call Reply' to the new access node LAC2 to confirm the state of the tunnelling and association of the PPP session connection between LNS and LAC2. If the association procedure was completed successfully, the new LAC2 and LNS may now initiate sending payload messages to each other. In case the procedure failed, it is necessary to renegotiate an entirely new PPP session between the LNS and LAC nodes, as is done at present in the prior art every time a mobile station roams from one service area to another.

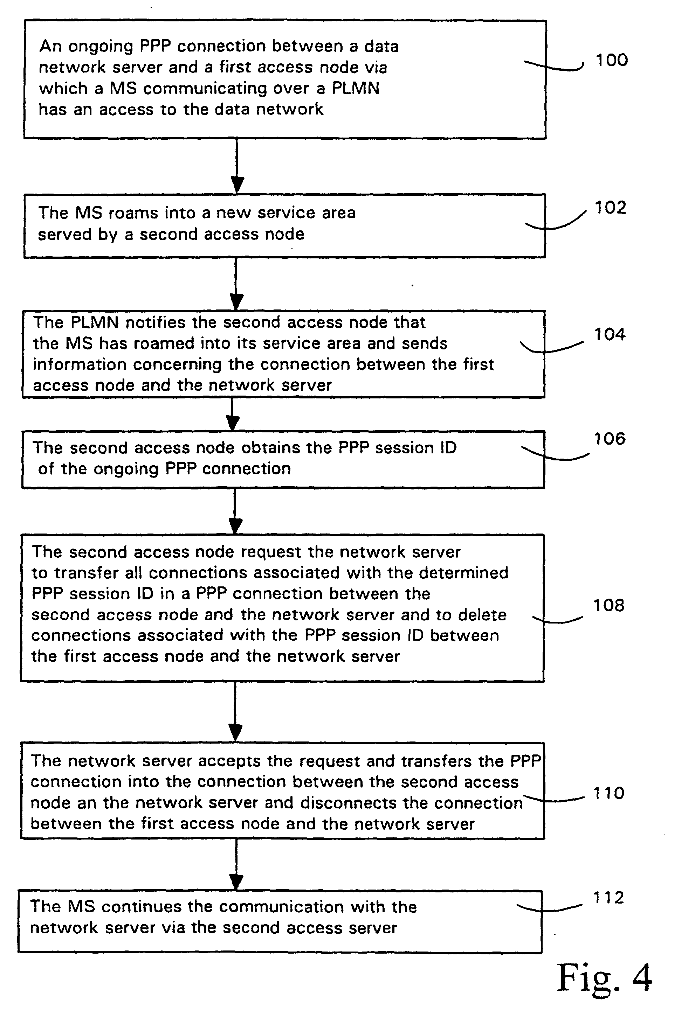

Figure 4 discloses the method steps for the embodiment disclosed by figure 2. The operation initiates at step 102 as a mobile user having an ongoing endpoint-to-server connection to the data network server (LNS) via a first access server roams into a new service area served by a second access server. At step 104 the PLMN notifies the second access server (LAC2) of this roamed mobile user and also of the ongoing connection from the mobile station to the network server LNS (this connection in consist of connections between the mobile station and the first access node and between the first access node LAC1 and the LNS). The appropriate LNS can be defined e.g. by means of the B-number information or data network address information of the LNS which can also be provided by the PLMN to the second access node.

At step 106 the second access node obtains the PPP Session ID of the connection between the first access node (LAC1) and the LNS, wherein the session ID is based to some unique PLMN ID, such as A-number information, IMSI and/or MSISDN information. The session ID can be provided by the PLMN as such on the basis of the A-number, IMSI, or MSISDN information, wherein the second access node recognises the session ID from the signalling concerning the roaming mobile station and coming from the PLMN. The second access node can, alternatively, be provided with appropriate means for determining the session ID, such as with a table or record for session IDs and corresponding A-number, IMSI, or MSISDN information.

At step 108 the second access node request the network server LNS to transfer all such calls or connections which associate with the determined PPP session ID into the "new" tunnelled connection between the second access server and the network server and to delete all such calls between the first access node and the network server which associate with the PPP session ID. It noted herein that even though this description refers to a connection between an access node and
a network server, the connection may comprise several high layer connection and lower layer connections, or multiplexed connections within one tunnel or connections within several tunnels, which all have to be transferred in case the mobile station roams into a new service area.

At step 110 the network server accepts the request and proceeds further so that the PPP connection or connections is/are transferred to continue between the new access node and the network server and that the old connection/ connections between the old access node and the data network server LNS become terminated.

It is also possible to increase the security level of the connection. For instance, in case there is a risk that a third party may obtain the PPP Session ID, it is possible to have an arrangement in which the LNS requests for an authentication from the mobile station during the connection, after the handover between the LACs has been finished. This can also be done later than immediately after the handover. The authentication can be accomplished e.g. by means of a password request and subsequent dialling of the password by the user. In case the LNS is provided with a table of the IMSI or ISDN number strings of those mobile station which are allowed to use the service, the authentication may occur by requesting this code to be transmitted to the LNS and by subsequent verification of the received code.

Thus, the invention provides a solution by which a significant improvement can be achieved in the area of accessing data network services by means of a mobile station. The invention is believed to provided advantages in various instances, and especially in such applications where one PLMN or geographical area, such as one country, is served by more than one access node. It should be noted that the foregoing examples of the embodiments of the invention are not intended to restrict the scope of the invention to the specific forms presented above but the present invention is meant rather to cover all modifications, similarities and alternatives which are included in the scope of the present invention. All additional embodiments, modifications and applications obvious to those skilled in the art are thus included within the scope of the invention as set forth by the claims appended hereto.

## Claims

1. A method for use in a communication system comprising at least one mobile communication network providing mobility for mobile stations, a data network, at least two access nodes for providing an access for the mobile stations to the data network, and at least one data network server for providing service or services, the method comprising steps of:
establishing a connection between a first access node and the data network server, wherein the connection is initiated and used by a mobile station located within a first service area of the communication system served by the first access node;
dedicating a specific session identification for the connection between the first access node and the data network server,
roaming of the mobile station using the connection between the first access node and the data network server from the first service area to a second service area of the communication system, wherein the second service area is served by a second access node;
recognising in the second access node the roaming mobile station;
**characterized in that** the method further comprises steps of:
obtaining said specific session identification in said second access node; and
requesting the data network server to transfer the connection between the first access node and the network server associating with said specific session identification to continue as a connection between said second access node and the data network server for enabling continuous communication between the mobile station and the network server.

2. Method according to claim 1, wherein the specific session identification consist of a session ID formed by means of at least some of the following: an International Mobile Subscriber Identity (IMSI), a Mobile Station ISDN number (MSISDN), calling number information (A-number).

3. Method according to claim 1, wherein the specific session identification consist of a Tunnel ID and a Call ID for the connection between the first access node and the data network server.

4. Method according to any of the preceding claims, wherein the connection between the respective access nodes and the data network server is a point-to-point connection, the point-to-point connection being preferably implemented by means of Layer Two Tunnelling Protocol (L2TP).

5. Method according to any of the preceding claims, wherein the second access node sends a 'Roaming Call Request' message to the network server after the recognition of the roaming mobile station, said message including the session identification information dedicated for the connection between the first access node and the data network server.

6. Method according to any of the preceding claims, wherein the roaming information concerning the roamed mobile station is provided for the second access node by the mobile communication network, said roaming information including data network server identification and the specific session identification or information on basis of which the second access node is capable of determining the specific session identification.

7. Method according to any of the preceding claims, wherein the data network is a packet switched public data network, such as the Internet.

8. Method according to any of the preceding claims, wherein it further comprises a step for requesting an authentication from the mobile station subsequent to the roaming from the first service area to the second service area.

9. A communication system comprising:
at least one mobile communication network providing mobility for mobile stations,
a data network,
a network server implemented in the data network,
a first access node serving a first service area of the communication system, wherein said first access node is arranged to enable an access for a mobile station to the data network by providing a connection between the first access node and the network server, said connection between the access node and the network server being dedicated with a specific session identification;
a second access node serving a second service area of the communication system, wherein said second access node is also arranged to enable an access for the mobile station to the data network by providing a connection between the second access node and the network server,
**characterized in that**
wherein the second access node is arranged to recognise the mobile station roaming into the second service area, and subsequent to such recognition to obtain the specific session identification and to send the obtained session identification information to the network server, and
wherein the network server is arranged to transfer the connection between the first access node and the network server to continue as a connection between the second access node and the network server for enabling a continuous communication between the mobile station and the network server.

10. System according to claim 9, wherein the by the mobile communication network is arranged to provide the second access node with predefined information concerning the roaming mobile station and the connection between the first access. node and the network server.

11. System according to claim 9 or 10, wherein the connection between the respective access nodes and the network server is a point-to-point connection, said point-to-point connection being preferably implemented by means of Layer Two Tunnelling Protocol (L2TP).

12. System according to any of claims 9 to 11, wherein the mobile communication network comprises a digital circuit switched cellular PLMN network, and the data network comprises a packet switched public data network, such as Internet.

13. System according to any of claims 9 to 12, wherein the mobile station comprises a mobile telephone and a data processing device capable of communicating with services provided by means of a packet switched data network.

## Patentansprüche

1. Verfahren zur Verwendung in einem Kommunikationssystem, das mindestens ein Mobilität für Mobilstationen bereitstellendes Mobilkommunikationsnetz umfasst, ein Datennetz, mindestens zwei Zugangsknoten zum Bereitstellen eines Zugangs für die Mobilstationen zu dem Datennetz und mindestens einen Datennetzserver zum Bereitstellen von einem Dienst oder Diensten, wobei das Verfahren die Schritte umfasst:
Einrichten einer Verbindung zwischen einem ersten Zugangsknoten und dem Datennetzserver, wobei die Verbindung von einer Mobilstation veranlasst und verwendet wird, die sich innerhalb eines ersten Dienstebereiches des von dem ersten Zugangsknoten bedienten Kommunikationssystems befindet;
Ausersehen einer spezifischen Sitzungsidentifikation für die Verbindung zwischen dem ersten Zugangsknoten und dem Datennetzserver;
Roaming der Mobilstation unter Verwendung der Verbindung zwischen dem ersten Zugangsknoten und dem Datennetzserver von dem ersten Dienstebereich zu einem zweiten Dienstebereich des Kommunikationssystems, wobei der zweite Dienstebereich von einem zweiten Zugangsknoten bedient wird;
erkennen der ein Roaming durchführenden Mobilstation im zweiten zugangsknoten;
**dadurch gekennzeichnet, dass** das Verfahren ferner die Schritte umfasst:
Erhalten der spezifischen Sitzungsidentifikation in dem zweiten Zugangsknoten; und
Auffordern des Datennetzservers, um die Verbindung zwischen dem ersten Zugangsknoten und dem Netzserver, die der spezifischen Sitzungsidentifikation zugeordnet ist, zu transferieren, um als eine Verbindung zwischen dem zweiten Zugangsknoten und dem Datennetzserver fortgesetzt zu werden, zum Einrichten einer kontinuierlichen Kommunikation zwischen der Mobilstation und dem Netzserver.

2. Verfahren nach Anspruch 1, wobei die spezifische Sitzungsidentifikation aus einer Sitzungs-ID besteht, die mit Hilfe von mindestens einigen aus der Gruppe gebildet wird, bestehend aus: einer internationalen Mobilteilnehmeridentität (IMSI), einer Mobilstations-ISDN-Nummer (MSISDN), einer Rufnummerninformation (A-Nummer) .

3. Verfahren nach Anspruch 1, wobei die spezifische Sitzungsidentifikation aus einer Tunnel-ID besteht und einer Ruf-ID für die Verbindung zwischen dem ersten Zugangsknoten und dem Datennetzserver.

4. Verfahren nach einem der vorhergehenden Ansprüche, wobei die Verbindung zwischen den jeweiligen Zugangsknoten und dem Datennetzserver eine Punkt-zu-Punktverbindung ist, wobei die Punkt-zu-Punktverbindung vorzugsweise mit Hilfe des Schicht-Zwei-Tunnel-Protokolls (L2TP) implementiert wird.

5. Verfahren nach einem der vorhergehenden Ansprüche, wobei der zweite Zugangsknoten eine "Roaming Call Request"- bzw. "Ruf-Roaming-Anfrage"-Meldung an den Netzserver sendet nach dem Erkennen der ein Roaming ausführenden Mobilstation, wobei die Meldung die Sitzungsidentifikationsinformation einschließt, die für die Verbindung zwischen dem ersten Zugangsknoten und dem Datennetzserver ausersehen ist.

6. Verfahren nach einem der vorhergehenden Ansprüche, wobei die die ein Roaming ausführende Mobilstation betreffende Roaming-Information dem zweiten Zugangsknoten durch das Mobilkommunikationsnetz bereitgestellt wird, die Roaming-Information eine Datennetzserveridentifikation einschließt und die spezifische Sitzungsidentifikation oder Information, worauf basierend der zweite Zugangsknoten imstande ist, die spezifische Sitzungsidentifikation zu bestimmen.

7. Verfahren nach einem der vorhergehenden Ansprüche, wobei das Datennetz ein öffentliches paketvermittelndes Datennetz, wie zum Beispiel das Internet ist.

8. Verfahren nach einem der vorhergehenden Ansprüche, wobei es ferner einen Schritt umfasst, eine Authentifizierung von der Mobilstation anzufordern, folgend auf das Roaming von dem ersten Dienstebereich zum zweiten Dienstebereich.

9. Kommunikationssystem, umfassend:
mindestens ein Mobilkommunikationsnetz, das Mobilstationen Mobilität bereitstellt;
ein Datennetz;
einen in dem Datennetz implementierten Netzserver;
einen einen ersten Dienstebereich des Kommunikationssystems bedienenden ersten Zugangsknoten, wobei der erste Zugangsknoten eingerichtet ist, um einen Zugang zum Datennetz für eine Mobilstation durch Bereitstellen einer Verbindung zwischen dem ersten Zugangsknoten und dem Netzserver zu ermöglichen, wobei die Verbindung zwischen dem Zugangsknoten und dem Netzserver mit einer spezifischen Sitzungsidentifikation versehen ist;
einen zweiten, einen zweiten Dienstebereich des Kommunikationssystems bedienenden Zugangsknoten, wobei der zweite Zugangsknoten auch eingerichtet ist, um einen Zugang zu dem Datennetz für die Mobilstation zu ermöglichen durch Bereitstellen einer Verbindung zwischen dem zweiten Zugangsknoten und dem Netzserver;
**dadurch gekennzeichnet, dass**
der zweite Zugangsknoten eingerichtet ist um die in den zweiten Dienstebereich ein Roaming ausführende Mobilstation zu erkennen, und folgend auf dieses Erkennen, die spezifische Sitzungsidentifikation zu erhalten und die erhaltene Sitzungsidentifikationsinformation an den Netzserver zu senden, und
der Netzserver eingerichtet ist, um die Verbindung zwischen dem ersten Zugangsknoten und dem Netzserver zu transferieren um eine Verbindung zwischen dem zweiten Zugangsknoten und dem Netzserver fortzusetzen zum Ermöglichen einer kontinuierlichen Kommunikation zwischen der Mobilstation und dem Netzserver.

10. System nach Anspruch 9, wobei das Mobilkommunikationsnetz eingerichtet ist zum Bereitstellen eines zweiten Zugangsknotens mit vordefinierter Information in Bezug auf die ein Roaming ausführende Mobilstation und die Verbindung zwischen dem ersten Zugangsknoten und dem Netzserver.

11. System nach Anspruch 9 oder 10, wobei die Verbindung zwischen den jeweiligen Zugangsknoten und dem Netzserver eine Punkt-zu-Punktverbindung ist, wobei die Punkt-zu-Punktverbindung vorzugsweise mit Hilfe des Schicht-Zwei-Tunnel-Protokolls (L2TP) implementiert wird.

12. System nach einem der Ansprüche 9 bis 11, wobei das Mobilkommunikationsnetz ein digitales schaltvermittelndes Zellularnetz (PLMN) umfasst und das Datennetz ein öffentliches paketvermittelndes Datennetz, wie zum Beispiel das Internet umfasst.

13. System nach einem der Ansprüche 9 bis 12, wobei die Mobilstation ein Mobiltelefon umfasst, und eine Datenverarbeitungseinrichtung, die imstande ist, mit Diensten zu kommunizieren, die mit Hilfe eines paketvermittelnden Datennetzes bereitgestellt werden.

## Revendications

1. Procédé destiné à être utilisé dans un système de communication comprenant au moins un réseau de communication mobile offrant la mobilité à des stations mobiles, un réseau de données, au moins deux noeuds d'accès pour offrir aux stations mobiles un accès au réseau de données et au moins un serveur de réseau de données pour fournir un service ou des services, le procédé comprenant les étapes consistant à :
établir une connexion entre un premier noeud d'accès et le serveur de réseau de données, la connexion étant ouverte et utilisée par une station mobile se trouvant dans une première zone de service du système de communication desservie par le premier noeud d'accès ;
dédier une identification de session spécifique à la connexion entre le premier noeud d'accès et le serveur de réseau de données ;
déplacer la station mobile, qui utilise la connexion entre le premier noeud d'accès et le serveur de réseau de données, entre la première zone de service et une seconde zone de service du système de communication, la seconde zone de service étant desservie par un second noeud d'accès ;
reconnaître la station mobile itinérante dans le second noeud d'accès ;
**caractérisé en ce que** le procédé comprend en outre les étapes consistant à :
obtenir ladite identification de session spécifique dans ledit second noeud d'accès ; et
demander au serveur de réseau de données de transférer la connexion entre le premier noeud d'accès et le serveur de réseau en l'associant avec ladite identification de session spécifique afin de la poursuivre sous la forme d'une connexion entre ledit second noeud d'accès et le serveur de réseau de données, afin de permettre une communication continue entre la station mobile et le serveur de réseau.

2. Procédé selon la revendication 1, dans lequel l'identification de session spécifique consiste en un identificateur de session formé à l'aide d'au moins certains des identificateurs suivants : identité internationale d'abonné mobile (IMSI, pour « International Mobile Subscriber Identity »), numéro de station mobile RNIS (MSISDN, pour « Mobile Station ISDN »), information du numéro appelant (numéro A).

3. Procédé selon la revendication 1, dans lequel l'identification de session spécifique consiste en un identificateur de tunnel et un identificateur d'appel pour la connexion entre le premier noeud d'accès et le serveur de réseau de données.

4. Procédé selon l'une quelconque des revendications précédentes, dans lequel la connexion entre les différents noeuds d'accès et le serveur de réseau de données est une connexion point à point qui est de préférence mise en oeuvre à l'aide du protocole d'effet tunnel de couche deux (L2TP, pour « Layer Two Tunnelling Protocol »).

5. Procédé selon l'une quelconque des revendications précédentes, dans lequel le second noeud d'accès envoie un message « Demande d'appel itinérant » au serveur de réseau après la reconnaissance de la station mobile itinérante, ledit message incluant l'information d'identification de session spécifique dédiée à la connexion entre le premier noeud d'accès et le serveur de réseau de données.

6. Procédé selon l'une quelconque des revendications précédentes, dans lequel l'information d'itinérance concernant la station mobile itinérante est fournie au second noeud d'accès par le réseau de communication mobile, ladite information d'itinérance comprenant une identification du serveur de réseau de données et l'identification ou l'information de session spécifique sur la base desquelles le second noeud d'accès est en mesure de déterminer l'identification de session spécifique.

7. Procédé selon l'une quelconque des revendications précédentes, dans lequel le réseau de données est un réseau public commuté de données en paquets, comme l'Internet.

8. Procédé selon l'une quelconque des revendications précédentes, qui comprend en outre une étape de demande d'une authentification à la station mobile après l'itinérance entre la première zone de service et la seconde zone de service.

9. Système de communications comprenant :
au moins un réseau de communication mobile offrant la mobilité à des stations mobiles,
un réseau de données,
un serveur de réseau mis en oeuvre dans le réseau de données,
un premier noeud d'accès desservant une première zone de service du système de communication, ledit premier noeud d'accès étant conçu pour permettre à une station mobile d'accéder au réseau de données en fournissant une connexion entre le premier noeud d'accès et le serveur de réseau, ladite connexion entre le noeud d'accès et le serveur de réseau étant dotée d'une information de session spécifique ;
un second noeud d'accès desservant une seconde zone de service du système de communication, ledit second noeud d'accès étant également conçu pour permettre à la station mobile d'accéder au réseau de données en fournissant une connexion entre le second noeud d'accès et le serveur de réseau,
**caractérisé en ce que** :
le second noeud d'accès est conçu pour reconnaître la station mobile pénétrant dans la seconde zone de service et, après cette reconnaissance, pour obtenir l'identification de session spécifique et envoyer l'information d'identification de session spécifique obtenue au serveur de réseau, et
le serveur de réseau est conçu pour transférer la connexion entre le premier noeud d'accès et le serveur de réseau pour qu'elle se poursuive sous la forme d'une connexion entre le second noeud d'accès et le serveur de réseau, afin de permettre une communication continue entre la station mobile et le serveur de réseau.

10. Système selon la revendication 9, dans lequel le réseau de communication mobile est conçu pour fournir au second noeud d'accès des informations prédéfinies concernant la station mobile itinérante et la connexion entre le premier noeud d'accès et le serveur de réseau.

11. Système selon la revendication 9 ou 10, dans lequel la connexion entre les différents noeuds d'accès et le serveur de réseau est une connexion point à point, ladite connexion point à point étant de préférence mise en oeuvre à l'aide du protocole d'effet tunnel de couche deux (L2TP).

12. Système selon l'une quelconque des revendications 9 à 11, dans lequel le réseau de communication mobile comprend un réseau numérique cellulaire commuté PLMN et le réseau de données comprend un réseau public commuté de données en paquets, comme l'Internet.

13. Système selon l'une quelconque des revendications 9 à 12, dans lequel la station mobile comprend un téléphone mobile et un dispositif de traitement de données capable de communiquer avec des services fournis par un réseau commuté de données en paquets.
